# EUROPEAN PATENT APPLICATION

(11) **EP 4 578 260 A1**
(43) Date of publication of application: **02.07.2025**
(21) Application number: 24221576.2
(22) Date of filing: 19.12.2024
(51) Int. Cl.: A01D 41/127, A01D 41/14, A01D 45/02

(54) **SYSTEMS AND METHODS TO MONITOR AND ADJUST OPERATION OF AN AGRICULTURAL SYSTEM**

(30) Priority: 28.12.2023 US 202363615322 P
(71) Applicant: CNH Industrial America LLC, New Holland, PA 17557 (US)
(72) Inventor: Todderud, Stephen, New Holland, 17557 (US); Thomas, Jeffrey, New Holland, 17557 (US); Darrow, Lane, New Holland, 17557 (US)
(74) Representative: CNH Industrial IP Department

(57) **Abstract**

An agricultural system includes a header with multiple row units distributed across a width of the header. At least one row unit of the multiple row units includes a pair of stalk rollers configured to engage material other than grain (MOG) of a crop and to drive the MOG toward a field, a light emitter configured to emit light, and a light detector configured to detect the light and to generate a signal indicative of detection of the light at the light detector. The agricultural system also includes a control system configured to determine a level of the MOG between the light emitter and the light detector based on the signal.

## Description

### BACKGROUND

The present invention generally relates to an agricultural system and, more particularly, to operating an agricultural header of the agricultural system to process crop materials.

A harvester may be used to harvest crops, such as barley, beans, beets, carrots, corn, cotton, flax, oats, potatoes, rye, soybeans, wheat, or other plant crops. The harvester may include or be coupled to a header, which may be designed to efficiently harvest certain types of crops. For example, a corn header may be designed to efficiently harvest corn. In particular, the corn header may include row units that include components that operate to separate ears of corn from stalks as the harvester travels through a field. A conveyor carries the ears of corn toward processing machinery and/or storage compartments of the harvester, while the stalks are deposited back into the field.

### SUMMARY

Certain embodiments commensurate in scope with the originally claimed subject matter are summarized below. These embodiments are not intended to limit the scope of the claimed subject matter, but rather these embodiments are intended only to provide a brief summary of possible forms of the disclosure. Indeed, the disclosure may encompass a variety of forms that may be similar to or different from the embodiments set forth below.

In one embodiment, an agricultural system includes a header with multiple row units distributed across a width of the header. At least one row unit of the multiple row units includes a pair of stalk rollers configured to engage material other than grain (MOG) of a crop and to drive the MOG toward a field, a light emitter configured to emit light, and a light detector configured to detect the light and to generate a signal indicative of detection of the light at the light detector. The agricultural system also includes a control system configured to determine a level of the MOG between the light emitter and the light detector based on the signal.

In another embodiment, a method of operating an agricultural system includes emitting a light with a light emitter positioned at a row unit of a header and detecting the light with a light detector positioned at the row unit of the header. The method also includes determining, with a control system, a level of material other than grain (MOG) of a crop between the light emitter and the light detector at the row unit of the header.

In another embodiment, a header for an agricultural system includes multiple row units distributed across a width of the header. At least one row unit of the multiple row units includes a pair of stalk rollers configured to engage material other than grain (MOG) of a crop and to drive the MOG toward a field, a light emitter configured to emit light, and a light detector configured to detect the light and to generate a signal indicative of detection of the light at the light detector.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a side view of an agricultural system, in accordance with an embodiment of the present disclosure;
FIG. 2 is a perspective side view of a header that may be employed within the agricultural system of FIG. 1, in accordance with an embodiment of the present disclosure;
FIG. 3 is a perspective bottom view of a portion of the header of FIG. 2, in accordance with an embodiment of the present disclosure;
FIG. 4 is a perspective front view of a portion of the header of FIG. 2, in accordance with an embodiment of the present disclosure; and
FIG. 5 is a flowchart of a method for adjusting one or more operating parameters of a header, such as the header of FIG. 2, in accordance with an aspect of the present disclosure.

### DETAILED DESCRIPTION

The process of farming typically begins with planting seeds within a field. Over time, the seeds grow and eventually become harvestable crops. Typically, only a portion of each crop is commercially valuable, so each crop is harvested to separate the usable material from the remainder of the crop. For example, a harvester may include or be coupled to a header to harvest crops within the field. The header may be a corn header that is designed to efficiently harvest corn within the field. The corn header may include multiple row units across a width of the corn header, and each row unit may include deck plates, stalk rollers, and/or other components that operate to separate ears of corn from stalks as the harvester travels through the field. A conveyor carries the ears of corn toward processing machinery and/or storage compartments of the harvester.

The corn header may also process materials other than grain (MOG), including the stalks, to discharge the MOG back onto the field. For example, the corn header may reduce the MOG into finer particles and distribute the particles of the MOG across the field. Such processing of the MOG may facilitate subsequent cleanup of the MOG during preparation for further harvesting operations. Unfortunately, it may be difficult to operate the agricultural system to process the MOG in a desirable manner. For example, in existing approaches, a user (e.g., an operator) may visually monitor processing of the MOG and manually adjust operation of the agricultural system. However, such responsibilities may be tedious and/or challenging to fulfill in addition to performing other tasks associated with operating the agricultural system.

Further, it is presently recognized that as crops impact the corn header or components thereof (e.g., deck plates), crop particles (e.g., individual kernels) from the crop may be directed into the air and away from the corn header (e.g., as a result of the impact with the header components). Thus, the crop particles are lost before being directed toward the processing machinery and/or storage compartments of the harvester, thereby reducing the yield from a harvesting operation. As discussed herein, "butt-shelling" may refer to the process of individual kernels of the crop being directed into the air (e.g., airborne) via engagement of the crop with components of the header (e.g., deck plates, stalk rollers). Unfortunately, it may be difficult to operate the agricultural system to limit butt-shelling in a desirable manner. For example, in existing approaches, the user may visually monitor for the individual kernels of the crop in the air and manually adjust operation of the agricultural system. However, such responsibilities may be tedious and/or challenging to fulfill in addition to performing other tasks associated with operating the agricultural system.

Accordingly, it may be desirable to employ one or more sensors to monitor aspects of harvesting operations, such as characteristics of MOG and presence of airborne particles. Further, it may be desirable to adjust one or more operating parameters of the corn header to improve the characteristics of the MOG and to limit an amount of butt-shelling, thereby facilitating subsequent cleanup of the MOG in the field and also increasing the yield in the harvesting operation.

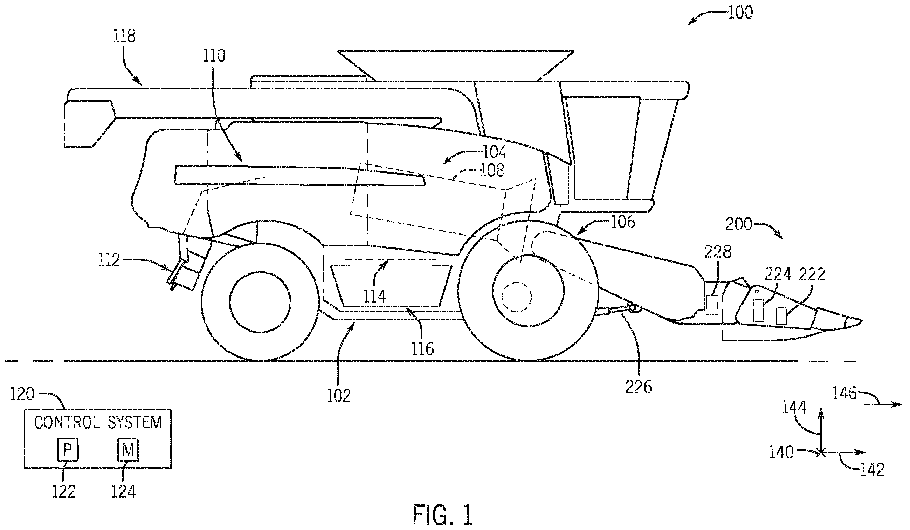

With the foregoing in mind, FIG. 1 is a side view of an embodiment of an agricultural system 100, which may be a harvester. The agricultural system 100 includes a chassis 102 configured to support a header 200 (e.g., a corn header) and an agricultural crop processing system 104. The header 200 is configured to separate portions of crops (e.g., ears of corn) from MOG (e.g., stalks, stems, leaves, husks, pods, other crop residue). The header 200 is also configured to transport the portions of the crops toward an inlet 106 of the agricultural crop processing system 104 for further processing of the portions of the crops, and the header 200 may also return the MOG to a field.

The agricultural crop processing system 104 receives the portions of the crops from the header 200 and separates desired crop material from crop residue. For example, the agricultural crop processing system 104 may include a thresher 108 having a cylindrical threshing rotor that transports the portions of the crops in a helical flow path through the agricultural system 100. In addition to transporting the portions of the crops, the thresher 108 may separate certain desired crop material (e.g., grain) from certain crop residue (e.g., husks and pods) and may enable the desired crop material to flow into a cleaning system 114 (such as sieves) located beneath the thresher 108. The cleaning system 114 may remove debris from the desired crop material and transport the desired crop material to a storage tank 116 within the agricultural system 100. When the storage tank 116 is full, a tractor with a trailer may pull alongside the agricultural system 100. The desired crop material collected in the storage tank 116 may be carried up by an elevator and dumped out of an unloader 118 into the trailer.

The header 200 may directly distribute and discharge the MOG to the field to avoid entry of the MOG into certain parts of the chassis 102, such as the agricultural crop processing system 104. In some embodiments, the agricultural system 100 includes a MOG handling system 110 that receives additional MOG (e.g., the certain crop residue directed by the thresher 108) that is not directly discharged from the header 200, and the MOG handling system 110 may process (e.g., chop/shred) and transport the additional MOG to a MOG spreading system 112 positioned at an aft end of the agricultural system 100. The MOG spreading system 112 distributes the additional MOG onto the field to facilitate performance of other operations. Distribution of the MOG onto the field may facilitate a subsequent operation that removes, chops, buries, or otherwise processes the MOG for subsequent preparation of the field.

The agricultural system 100 also includes a control system 120 (e.g., an automation controller, an electronic controller, a programmable controller, a cloud computing system, control circuitry) with a processor 122 (e.g., processing circuitry) and memory 124. The processor 122 may be used to execute software code or instructions stored on the memory 124, such as to process signals, control the agricultural system 100, and/or control the header 200. The term "code" or "software code" used herein refers to any instructions or set of instructions that control the operation of the control system 120. The code or software code may exist in a computer-executable form, such as machine code, which is the set of instructions and data directly executed by the processor 122 of the control system 120, human-understandable form, such as source code, which may be compiled in order to be executed by the processor 122 of the control system 120, or an intermediate form, such as object code, which is produced by a compiler.

As an example, the memory 124 may store processor-executable software code or instructions (e.g., firmware or software), which are tangibly stored on a non-transitory computer readable medium. Additionally or alternatively, the memory may store data. As an example, the memory 124 may include a volatile memory, such as random access memory (RAM), and/or a nonvolatile memory, such as read-only memory (ROM), flash memory, a hard drive, or any other suitable optical, magnetic, or solid-state storage medium, or a combination thereof. Furthermore, the processor 122 may include multiple microprocessors, one or more "general-purpose" microprocessors, one or more special-purpose microprocessors, and/or one or more application specific integrated circuits (ASICS), or some combination thereof. For example, the processor 122 may include one or more reduced instruction set (RISC) or complex instruction set (CISC) processors. The processor 122 may include multiple processors, and/or the memory 124 may include multiple memory devices. The processor 122 and/or the memory 124 may be located in any suitable portion of the agricultural system 100 (e.g., a cab of the agricultural system 100 and/or on the header 200). Further, the control system 120 may be a distributed controller with the multiple processors and/or the multiple memory devices in separate housings or locations (e.g., in the agricultural system 100, in the header 200, in a remote location, in the cloud). In such cases, operations described herein may be divided between the multiple processors (e.g., one processor carries out certain operations, another processor carries out other operations, and so forth).

The control system 120 is communicatively coupled to the header 200. Thus, the control system 120 may operate the header 200 to control processing of the portions of the crops and the MOG. As an example, the control system 120 may output a control signal to one or more actuators 224 to adjust operation of the header 200 to adjust the MOG output by the header 200 (e.g., to facilitate direct discharge onto the field). For instance, as discussed herein, the header 200 may include stalk rollers that direct the MOG onto the field, and the control system 120 may output the control signal to adjust a rotation rate of the stalk rollers to direct the MOG onto the field (e.g., to block entry of the MOG to the agricultural crop processing system 104).

The control system 120 may be communicatively coupled to one or more sensors 222. The one or more sensors 222 may be positioned on the header 200 and may be configured to monitor parameters related to harvesting operations. For example, the one or more sensors 222 may include one or more sensors (e.g., optical sensors) configured to detect and monitor a depth of engagement of the stalks at row units of the header 200, one or more sensors (e.g., optical sensors) to detect and monitor the MOG between the row units of the header 200 and the agricultural processing system 104, and/or one or more sensors (e.g., impact sensors) to detect and monitor airborne individual kernels of the crops at the header 200 (e.g., butt-shelling).

By way of example, the control system 120 may use sensor data (e.g., signals) output by the one or more sensors 222 to determine one or more characteristics of the MOG, including presence of MOG in rear portions of the row units of the header 200, an amount of MOG delivered from the row units of the header 200 toward the agricultural processing system 104, an amount of butt-shelling, other suitable parameter(s), or any combination thereof. The one or more sensors 222 may output sensor data indicative of the monitored parameter(s) to the control system 120, and the control system 120 may operate components of the agricultural system 100 based on the received sensor data. For example, the control system 120 may output a control signal to adjust operation of the header 200 in response to determining at least one characteristic determined based on the sensor data is outside of a range of values. Further still, the control system 120 may adjust a travel speed (e.g., ground speed) of the agricultural system 100 based on the received sensor data.

Additionally or alternatively, the control system 120 may output the control signal in response to receipt of a user input. For example, the agricultural system 100 may include a user interface (e.g., disposed in a cab), which may include a touchscreen, a dial, a lever, a switch, a button, a trackpad, a mouse, and the like, and the control system 120 may receive the user input based on an interaction between a user (e.g., an operator) and the user interface. The user input may, for instance, include a request for directly adjusting operation of the header 200 and/or the travel speed of the agricultural system 100. It should be noted that the operation of the agricultural system 100 effectuated by the control system 120 may enable the agricultural system 100 to process the MOG in a desirable manner without causing excessive product loss.

As noted herein, the agricultural system 100 also includes one or more actuators configured to control the spatial orientation and/or position of the header 200 with respect to the chassis 102 and/or with respect to the crop rows/ground/soil. A header height actuator 226 may drive the header 200 to move along the vertical axis 144 relative to the ground. The header 200 may be attached to the chassis 102 via a linkage, and the position of the linkage may be controlled by the header height actuator 226 to adjust the height of the header 200. The agricultural system 100 may also include a header orientation actuator 228, which may be configured to rotate the header 200 (e.g., the entire header 200 or a portion thereof) relative to the ground. The header 200 may also include one or more header component actuators 224, which may be configured to adjust one or more components of the row units of the header 200. The control system 120 is communicatively coupled to the actuators 224, 226, 228 and may control the actuators 224, 226, 228 to adjust operation of the agricultural system 100, such as based on sensor data indicative of the one or more parameters of the harvesting operation. To facilitate discussion, the header 200 may be described with reference to a lateral axis or direction 140, a longitudinal axis or direction 142, and a vertical axis or direction 144. The agricultural system 100 and/or its components may also be described with reference to a direction of travel 146.

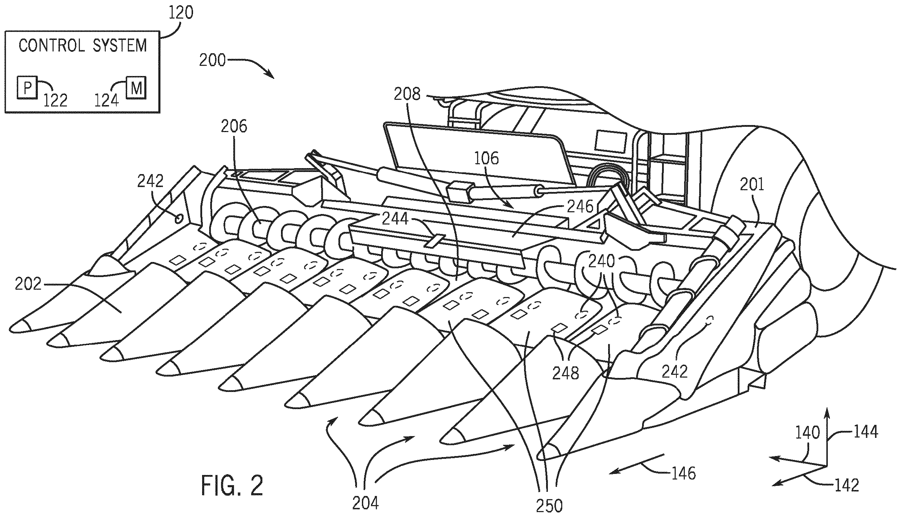

FIG. 2 is a perspective view of an embodiment of the header 200 that may be employed within the agricultural system 100 of FIG. 1. In the illustrated embodiment, the header 200 is a corn header and is supported by a frame 201, which may be coupled to the chassis 102 of the agricultural system 100 of FIG. 1. The header 200 includes multiple dividers 202 configured to divide rows of a crop (e.g., corn). The dividers 202 may be distributed across a width of the header 200 (e.g., along the lateral axis 140). As the header 200 moves along a path, the dividers 202 may direct the crops from each row to one or more row units 204. The row units 204 are configured to separate a portion of each crop (e.g., an ear of corn) from a stalk, thereby separating the portion of each crop from the soil. The portion of the crop may be directed to a conveyor 206 (e.g., one or more augers) configured to convey the portion of the crop laterally inward along the lateral axis 140 to a center crop conveyor 208 at a center of the header 200, and the center crop conveyor 208 directs the portion of the crop toward the inlet 106 of the agricultural crop processing system 104 of the agricultural system 100 of FIG. 1. As illustrated, the conveyor 206 extends along a substantial portion of the width of the header 200 (e.g., along the lateral axis 140). The conveyor 206 may be driven by a drive mechanism (e.g., electric motor, hydraulic motor). The row units 204 may also chop and/or return other portions of the crops (e.g., MOG, such as the stalks) to the field.

As described herein, the header 200 may also include or be associated with a sensor system that includes the one or more sensors 222 of FIG. 1. In particular, the sensor system may include a MOG sensor system that includes one or more sensors 240 (e.g., optical sensors) positioned at the one or more row units 204, such as under respective hoods 250 between adjacent row units 204. The one or more sensors 240 may detect and monitor one or more characteristics of the MOG, such as presence of the stalks at a rear portion of the one or more row units 204. Additionally or alternatively, the MOG sensor system may include one or more sensors 242 (e.g., optical sensors) positioned between the one or more row units 204 and the conveyor 206 along the longitudinal axis 142, such as on opposing faces of the frame 201 or other structure of the header 200. The one or more sensors 242 may detect and monitor one or more characteristics of the MOG, such as presence of the stalks or other crop residue along the conveyor 206. Additionally or alternatively, the MOG sensor system may include one or more sensors 244 (e.g., imaging sensor; camera) positioned proximate to the center of the header 200, such as mounted on and extending forward of a hood 246 (e.g., cover) or other structure over the conveyor 206. The one or more sensors 244 may detect and monitor one or more characteristics of the MOG, such as presence of the stalks or other crop residue at or proximate to the conveyor 206 at the center of the header 200.

In certain embodiments, the sensor system may include an airborne particle sensor system (APSS) that includes one or more sensors 248 (e.g., impact sensors) positioned at the one or more row units 204, such as on the respective hoods 250 between adjacent row units 204. The one or more sensors 248 may detect and monitor impacts due to initial contact between the ears of corn and the deck plates and/or impacts due to individual kernels of the crop striking the respective hoods 250. In some embodiments, the one or more sensors 248 may detect and monitor a respective impact location of a respective portion of each crop (e.g., each ear of corn) at the one or more row units 204 (e.g., relative to the longitudinal axis 142), such as by employing two impact sensors offset along the longitudinal axis 142 at a particular row unit of the header 200. For example, the impact due to the initial contact between the ears of corn and the deck plates may generate different impact signals at the two impact sensors, and the different impact signals may be processed to determine the impact location. The impact location may indicate aspects of MOG processing (e.g., rearward impact location may correlate with or be expected to lead to excessive MOG in the rear portions of the row units of the header 200). Further, an amplitude or force of the impact may be assessed, as this may indicate aspects of butt-shelling (e.g., high force may correlate with or be expected to lead to excessive butt-shelling).

It should be appreciated that the sensor system may include any type of sensors, such as impact sensors, optical sensors, contact sensors, radar sensors, camera sensors, and/or any other suitable type of sensors. For example, the one or more sensors 240 may include a switch or contact sensor to detect presence of the MOG, although the optical sensors may provide advantages related to accuracy and/or stalk detection, as described herein. As another example, the one or more sensors 242 may include a radar sensor to detect the presence of the MOG, although the optical sensor may provide consistency of operation when the optical sensor is also used as the one or more sensors 240. As another example, the one or more sensors 248 may include an imaging sensor or camera, such as to capture images (e.g., imagery) of the crop traveling through the row units and/or airborne individual kernels of the crop due to butt-shelling. In such cases, the one or more sensors 248 may include multiple imaging sensors or cameras along the longitudinal axis 142 for a particular row unit, or a wide angle imaging sensor or camera to capture a length of the particular row unit along the longitudinal axis 142. Further, the sensor system may include the one or more sensors at any suitable locations and/or orientations to facilitate techniques described herein. For example, the one or more sensors 248 may be mounted on and extend forward of the hood 246 or other structure to capture the images of the crop traveling through the row units an/dor the airborne individual kernels of the crop due to butt-shelling.

As described herein, the MOG sensor system may be communicatively coupled to the control system 120, which receives and processes sensor data from the one or more sensors 240, 242, 244 to determine one or more characteristics of the MOG. For example, the control system 120 may process the sensor data from the one or more sensors 240 to determine presence of the stalks at the rear portion of the one or more row units 204 over a period of time. The control system 120 may also process the sensor data from the one or more sensors 248 to determine (e.g., estimate; approximate) a number of individual kernels (e.g., in an area proximate to the header 200) over the period of time. For example, the control system 120 may determine presence of the stalks at the rear portion of the one or more row units 204 and count more than 100 impacts due to individual kernels over a five minute period of time. In response to identifying the presence of the stalks at the rear portion of the one or more row units 204 and determining that the number of individual kernels exceeds a threshold, the control system 120 may generate an appropriate output in an attempt to discharge the stalks before the rear portion of the one or more row units 204 and to reduce a number of individual kernels as the harvesting operation continues, as described in greater detail herein. For instance, in this example, the appropriate output may include reducing a travel speed of the agricultural system 100 through the field.

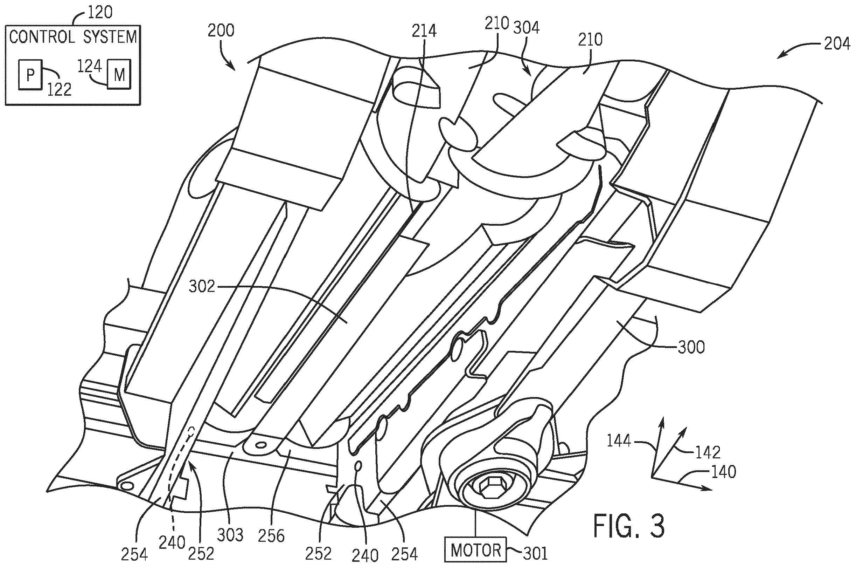

FIG. 3 is a perspective bottom view of an embodiment of a portion of the header 200. The header 200 includes a chopper 300 configured to rotate to cut stalks and other MOG that are being directed downwardly by stalk rollers 210. As discussed herein, the stalk rollers 260 may direct the MOG downwardly through a gap 214 for discharge from the header 200. While the stalk rollers 210 direct the MOG through the gap 214, the chopper 300 may continue to cut the MOG, thereby reducing a size of the MOG being discharged from the header 200. In additional or alternative embodiments, the stalk rollers may include blades, knives, discs, or a combination thereof, that may cut the MOG during rotation of the stalk rollers to reduce the size of the MOG (e.g., prior to or without cutting by the chopper).

The control system 120 may be communicatively coupled to the chopper 300 and may operate the chopper 300 to cut the MOG. For example, the control system 120 may output a control signal to a chopper motor 301 to increase a rotational speed of the chopper 300 (e.g., relative to the rotational speed of the stalk rollers 210) to cut the MOG more finely (e.g., the particles of cut MOG may be relatively smaller), such as based on the sensor data from the sensor system. The control system 120 may also output a control signal to the chopper motor 301 to reduce the rotational speed of the chopper 300 to cut the MOG more coarsely (e.g., the particles of cut MOG may be relatively larger), such as based on the sensor data from the sensor system.

The header 200 also includes a counter knife 302 (e.g., a counter blade), which may facilitate operation of the chopper 300 in cutting the MOG. For example, the counter knife 302 may support the MOG being moved by the stalk rollers 210 and provide resistance to enable the chopper 300 to cut the MOG more easily. For example, the chopper 300 may cut the MOG against the counter knife 302, such that each of the chopper 300 and the counter knife 302 impart a force against the MOG to cut the MOG. As such, the counter knife 302 may improve operation of the chopper 300. The counter knife 302 may be coupled to the row unit 204, such as to a support 303, and may extend toward a front end 304 (e.g., an upstream end, a tip) of the header 200, such as generally along the longitudinal axis 142. Thus, a portion of the counter knife 302 may overlap with the chopper 300 during rotation of the chopper 300 to enable the counter knife 302 to contact and support the MOG being cut by the chopper 300. In alternative embodiments, the counter knife may have a different configuration (e.g., the counter knife may have a different geometry, such as a triangular shape), the counter knife may be moved in a different manner (e.g., translated toward or away from the front end 304), or the counter knife may be omitted.

As shown, the one or more sensors 240 are positioned at the one or more row units 204, such as under respective hoods 250 between adjacent row units 204. The one or more sensors 240 may detect and monitor one or more characteristics of the MOG, such as presence of the stalks at a rear portion of the one or more row units 204. As described herein, the one or more sensors 240 may be communicatively coupled to the control system 120, which receives and processes sensor data from the one or more sensors 240 to determine one or more characteristics of the MOG. For example, the control system 120 may process the sensor data from the one or more sensors 240 to determine presence of the stalks at the rear portion of the one or more row units 204 over a period of time.

The one or more sensors 240 may include at least one emitter-detector pair, which each include a light emitter and a light detector positioned on opposite lateral sides of the gap 214. The light emitter and the light detector may be positioned to allow light emitted by the light detector to reach the light detector, at least without the MOG positioned between the light emitter and the light detector. For example, the light emitter and the light detector may be positioned below the stalk rollers 310, the counter knife 302, and/or other structures of the row unit 204 relative to the vertical axis 144. Further, the light emitter and the light detector may be positioned above the chopper 300 relative to the vertical axis 144. In certain embodiments, the light emitter and the light detector may be positioned in a rear portion of the row unit 204, such as rearward of a midline of the row unit 204 (e.g., rearward of a midline or midpoint of the stalk rollers 210, the chopper 300, the respective hoods 250, or other component of the row unit 204). For example, the light emitter and the light detector may be positioned rearward of a midline or midpoint of the respective hoods 250 and under the respective hoods 250, as well as forward of the conveyor 206 shown in FIG. 2.

It should be appreciated that the light emitter may be configured to emit the light with particular characteristics, such as with a particular wavelength (e.g., wavelength range). In such cases, the light detector may be configured to detect the light with the particular characteristics, such as with the particular wavelength. For example, the light may be infrared (IR) light, which may facilitate detection of the light by the light detector (e.g., without noise or interference due to detection of visible light).

The light emitter and the light detector are positioned on opposed surfaces 252 of brackets 254 (e.g., the opposed surfaces 252 are laterally-facing surfaces that face toward one another along the lateral axis 140). Thus, the light emitted by the light emitter travels along a path 256 to reach the light detector without the MOG positioned between the light emitter and the light detector. However, the light emitted by the light emitter does not reach the light detector (e.g., the path 256 is interrupted) with the MOG positioned between the light emitter and the light detector. Further, the light detector provides sensor data to the control system 120, wherein the sensor data indicates detection (e.g., presence; on) of the light at the light detector or lack of detection (e.g., absence; off) of the light at the light detector. In this way, the emitter-detector pair may detect presence of the MOG in the rear portion of the row unit 204, and the control system 120 may monitor the presence of the MOG in the rear portion of the row unit 204.

In particular, the control system 120 may monitor "on" and "off" time for the light detector, wherein the "on" time refers to a respective time at which the light detector detects the light emitted by the light emitter and the "off" time refers to a respective time at which the light detector does not detect the light emitted by the light emitter. For example, for a time period during harvesting operations, it may be expected or desired that the "on" time is approximately equal to or greater than a first percentage (e.g., 50, 75, 90 percent) of the time period and the "off' time is approximately equal to or less than a second percentage (e.g., 50, 25, or 10 percent) of the time period. This may indicate that the MOG is being properly and timely deposited from the row unit 204 during the harvesting options (e.g., without reaching the conveyor 206 of FIG. 2; acceptable balance of efficiency/speed and deposition of the MOG).

In certain embodiments, the control system 120 may also analyze the "on" time and the "off' time to determine presence of the stalks between the light emitter and the light detector. The presence of the stalks may result in a particular pattern (e.g., a regular pattern or regular intervals, such as occurrence of the "on" time for a first length of time, then occurrence of the "off" time for a second length of time, occurrence of the "on" time for the first length of time, then occurrence of the "off' time for the second length of time, and so on over the time period). The presence of the stalks may result in the particular pattern, while the presence of the other MOG (e.g., leaves, husks) may result in the "off' time without the particular pattern (e.g., irregular intervals). In some cases, for the time period during the harvesting operations, it may be expected or desired that very few or no stalks reach the rear portion of the row unit 204 between the light emitter and the light detector. For example, it may be expected or desired that the "off' time due to the presence of the stalks be approximately equal to or less than a third percentage (e.g., 25, 10, or 5 percent) of the time period, or that the "on" time and the "off' time indicate absence of the stalks between the light emitter and the light detector. This may indicate that the MOG, including the stalks, is being properly and timely deposited from the row unit 204 during the harvesting options (e.g., without reaching the conveyor 206 of FIG. 2; acceptable balance of efficiency/speed and deposition of the stalks of the MOG).

Thus, the control system 120 may receive the sensor data from the light detector and analyze the sensor data to determine characteristics of the MOG, such as the presence of the MOG in the rear portion of the row unit 204 (e.g., between the light emitter and the light detector along the lateral axis 140), a type of the MOG (e.g., the stalks or the other MOG) in the rear portion of the row unit 204, a count of the stalks in the rear portion of the row unit 204 (e.g., by counting "off' times during the particular pattern indicative of the stalks), a respective percentage of time that the MOG is present in the rear portion of the row unit 204, a respective percentage of time that the MOG is not presence in the rear portion of the row unit 204, and so on. Then, the control system 120 may provide outputs (e.g., control signals) based on the sensor data. For example, the control system 120 may provide the outputs to adjust the travel speed of the agricultural system 100 of FIG. 1 through the field and/or to adjust other components as described in greater detail herein.

It should be appreciatef that the at least one emitter-detector pair for a respective row unit 204 may include one emitter-detector pair or multiple emitter-detector pairs (e.g., 2, 3, 4, or more) spaced apart along the longitudinal axis 142 or otherwise spaced apart between a forward end portion and a rear end portion of the respective row unit 204. With the multiple emitter-detector pairs, the multiple detectors may generate the sensor data that indicates more specific location or depth of the MOG, including the stalks, along the respective row unit 204. In such cases, the control system 120 may process and utilize the sensor data to confirm proper location or depth of MOG, including the stalks, along the respective row unit 204. For example, the sensor data may indicate that the stalks are present at a forward-most emitter-detector pair and not present at a rearward-most emitter-detector pair, which may confirm proper deposition or release of the stalks. As another example, the sensor data may indicate that the stalks are present at a first emitter-detector pair, which indicates that a first adjustment should be made to components of the agricultural system 100 of FIG. 1 (e.g., the travel speed should be reduced by a first amount). Further, the sensor data may indicate that the stalks are present at second emitter-detector pair that is rearward of the first emitter-detector pair, which indicates that a second adjustment should be made to the component of the agricultural system 100 of FIG. 1 (e.g., the travel speed should be reduced by a second amount that is greater than the first amount). In this way, the at least one emitter-detector pair for the respective row unit 204 may provide various information that may be utilized by the control system 120 to adjust the operation of the components of the agricultural system 100 of FIG. 1 to facilitate effective harvesting operations.

Additionally, it should be appreciated that each of the row units 204 of the header 200 may include at least one emitter-detector pair, such that the control system 120 may determine the characteristics of the MOG at each of the row units 204 of the header 200. Alternatively, any portion or number of the row units 204 of the header 200 may include at least one emitter-detector pair. For example, only one row unit 204 of the header 200 may include at least one emitter-detector pair, wherein the only one row unit 204 is in a middle portion (e.g., a middle row unit) of the header 200 across the width of the header 200. In such cases, the sensor data generated by the light detector of the at least one emitter-detector pair is considered to be indicative of the characteristics of the MOG across the width of the header 200. As another example, two, three, four, or more row units 204 of the header 200 may each include at least one emitter-detector pair, wherein such row units 204 are distributed across the width of the header 200. For instance, every other row unit 204 across the width of the header 200 may each include at least one emitter-detector pair, such that the sensor data is indicative of the characteristics of the MOG across the width of the header 200.

Accordingly, it should be appreciated that in some cases the control system 120 may analyze the sensor data on a row unit by row unit basis. In some such cases, the control system 120 may provide the outputs to control the components on a row unit by row unit basis, such as to control respective stalk rollers 210 for a particular row unit 204 based on the sensor data indicative of the MOG at the particular row unit 204. In certain embodiments, the control system 120 may analyze the sensor data for multiple row units 204 (e.g., sensor fusion) across the width of the header 200 to determine the appropriate outputs. For example, if the sensor data indicates excessive MOG levels (e.g., excessive "off" time) in the rear portions of more than half of the row units 204 across the width of the header 200, then the control system 120 may provide the outputs to control the components in an effort to reduce the MOG in the rear portions. However, if the sensor data indicates excessive MOG levels in the rear portions of less than half of the row units 204 across the width of the header 200, then the control system 120 may not provide the outputs and may maintain the components to continue the harvesting operations.

In certain embodiments, the control system 120 may utilize artificial intelligence (AI) or machine learning (e.g., machine learning algorithms) to analyze the sensor data to characterize a level of MOG and/or to determine the appropriate outputs to provide desirable distribution or release of the MOG into the field. In some embodiments, the control system 120 may utilize a trained neural network to assess the sensor data to identify the characteristics of the MOG. For example, the trained neural network may be configured to identify the stalks based on patterns in the sensor data, percentages of the "on" time and the "off" time, and so on, and then determine the appropriate outputs to change the components to provide the desirable distribution or release of the MOG into the field.

Embodiments may use machine learning to establish learned relationships between inputs (e.g., sensor data) and outputs (e.g., control signals). Rather than using a conversion equation, a trained machine learning model (e.g., trained with training data, which may be modeled data, empirical data, or both) learns many relationships that may not be readily apparent to a human observer. The trained machined learning model can improve result accuracy, particularly for conditions that are not well quantified through a conversion equation. Further, in contrast to a conversion equation, the trained machine learning model may have unpredictable and/or dynamic outputs based on the training data. The trained machine learning model may be particularly useful for evaluating and responding based on the sensor data collected at multiple row units 204 across the width of the header 200, the sensor data collected over time, and/or the sensor data collected from the one or more sensors 240 and also the one or more sensors 242, 248 of FIG. 2. Additional examples and control operations are described in greater detail herein.

It should be appreciated that the one or more sensors 242 may include an emitter-detector pair that operates in a similar manner, such as by detecting "on" times and "off' times due to interruption of the light by the MOG present along the conveyor 206 of FIG. 2. The one or more sensors 242 may be positioned (e.g., along the vertical axis 144) such that the portion of the crop (e.g., the ears of corn) do not cause the interruption of the light, but that the MOG that builds up on or with the portion of the crop (e.g., the stalks extending from the portion of the crop) cause the interruption of the light. The control system 120 may analyze the "on" times and the "off' times in a similar manner (e.g., comparison to thresholds) to prompt or determine appropriate outputs to limit the MOG present along the conveyor 206 of FIG. 2.

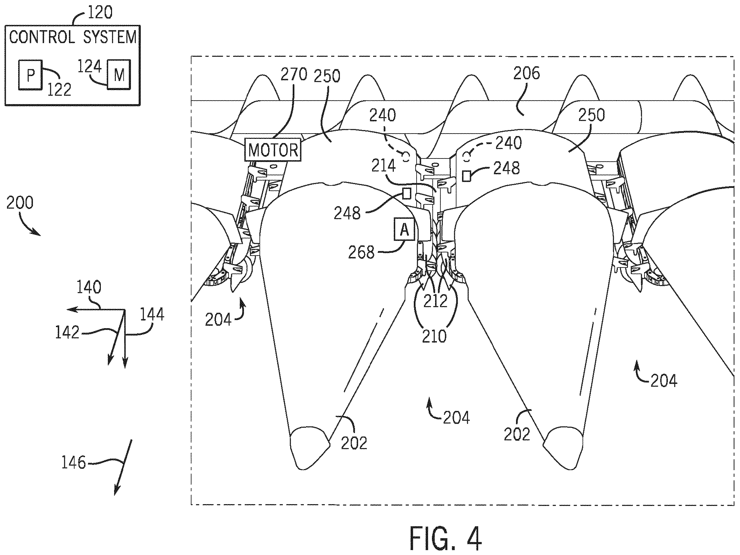

FIG. 4 is a perspective view of an embodiment of a portion of the header 200. As shown, the portion of the header 200 includes the multiple dividers 202 that direct the crops to one or more row units 204. Each row unit 204 includes various components that operate to separate a portion of the crop (e.g., ear of corn; desirable crop material) from the stalk and other MOG, carry the portion of the crop toward the conveyor 206, and return the stalk and other MOG to the field. For example, each row unit 204 may include the stalk rollers 210 that are configured to grip the stalk and rotate in opposite directions to push the stalk in a direction toward the field (e.g., vertically downward along the vertical axis 144; below the header 200). The stalk rollers 210 may be controlled to operate (e.g., rotate) at a particular speed to direct the stalk toward the field. In some embodiments, the control system 120 may control a stalk roller motor 270 to adjust the particular speed at which the stalk rollers 210 rotate, such as based on the sensor data received from the sensor system, as described in greater detail herein.

Each row unit 204 also includes deck plates 212 that are positioned over (e.g., above) the pair of stalk rollers 210 relative to the vertical axis 144. Each deck plate 212 extends from a first end to a second end along the longitudinal axis 142, and the deck plates 212 are separated from one another along the lateral axis 140 to define the gap 214. The deck plates 212 are spaced apart so that a width of the gap 214 along the lateral axis 140 is sized to enable the stalk and the other MOG to move through the gap 214, but to block the portion of the crop (e.g., ear of corn) from moving or falling through the gap 214. That is, the deck plates 212 may receive the portion of the crop (e.g., ear of corn) and block entry of the portion of the crop (e.g., ear of corn) through the gap 214. In some embodiments, the control system 120 may control an actuator 268 to adjust the deck plates 212 toward and away from one another along the lateral axis 140 to change the width of the gap 214, as described in greater detail herein.

Further, each row unit 204 may include a pair of chains 216 (e.g., with lugs) that are configured to drive or push the portion of the crop (e.g., ear of corn) along the pair of deck plates 212 toward the conveyor 206. A respective hood 250 is positioned rearward of each divider 202 relative to the direction of travel 146 and between adjacent row units 204 to cover various components, such as an actuator that drives the deck plates 212, linkages, and so forth.

For good harvesting performance, the portion of the crop (e.g., ear of corn) should make initial contact with the deck plates 212 toward a forward portion of the of deck plates 212 relative to the longitudinal axis 142 or the forward direction of travel 146 of the header 200. This may enable the portion of the crop to separate from its stalk, such that the stalks and at least most of the other MOG can be completely discharged from the header 200 before reaching the rear portion of the of deck plates 212, thereby reducing a likelihood of the stalks and the other MOG being fed into the conveyor 206.

Additionally, if the width of the gap 214 is too large, both the stalk and the portion of the crop may pass through the gap 214 and may be discharged from the header 200 before being directed to the conveyor 206, thereby resulting in product loss (e.g., loss of the desirable crop material). If the width of the gap 214 is too small, the stalk may be prevented from passing through the gap 214, and thus the stalk may also be directed toward the conveyor 206, which may be undesirable. Indeed, a variety of operational and/or structural factors, such as a ground speed of the header 200, a rotational rate of the stalk rollers 210, and/or the width of the gap 214 between the deck plates 212 (e.g., relative to a size of the portion of the crop and the stalk), may cause undesirable levels of the MOG at the conveyor 206.

In other cases, the width of the gap 214 may be sized such that excessive butt-shelling occurs. For example, as noted herein, butt-shelling may refer to individual kernels or particles of a crop being dislodged from the crop as the crop strikes or engages with the deck plates 212. The butt-shelling may be a result of, and/or may be affected by, a velocity at which the crop strikes the deck plates 212. However, in some cases, butt-shelling may occur when the width of the gap 214 is sized such that only a portion of the portion of the crop (e.g., the ear of corn) may pass through the gap 214 without interference, while different portions of the portion of the crop engage with the deck plates 212. Thus, a variety of operational and/or structural factors, such as a ground speed of the header 200, a rotational rate of the pair of stalk rollers 210, and/or the width of the gap 214 between the deck plates 212 (e.g., relative to a size of the portion of the crop), may cause butt-shelling and/or affect a rate of butt-shelling.

Another factor for good harvesting performance is the speed at which the stalk rollers 210 direct the stalk and the portion of the crop toward the deck plates 212. For example, if the speed of the stalk rollers 210 is too high (e.g., too fast), the impact force from the portion of the crop striking the deck plates 212 as the stalk is directed through the gap 214 may be sufficient to cause kernels to dislodge from the portion of the crop (e.g., butt-shelling). However, if the speed of the pair of stalk rollers 210 is too low (e.g., too slow), reduced efficiency associated with harvesting a field may occur, thereby resulting in increased costs (e.g., more gas, more time for operators to harvest a field) associated with harvesting (e.g., fuel costs increase as equipment is running for longer amount of time, an amount of time that a farmer spends on a harvester may be increased, thereby resulting in less time to perform other harvesting operations). Accordingly, it may be desirable to operate the pair of stalk rollers 210 at a target speed (e.g., speed or speed range) that limits an amount of butt-shelling and discharges the stalks to enable an operator to efficiently perform the harvesting operation.

Accordingly, the control system 120 may receive the sensor data from the one or more sensors 240, 242, 248 and analyze the sensor data (e.g., via the trained machine learning model) to determine the characteristics of the MOG and/or the amount of butt-shelling. Further, the control system 120 may determine (e.g., via the trained machine learning model) the appropriate outputs to adjust the components, such as to adjust the width of the gap 214, the rotation rate of the stalk rollers 210, the travel speed of the header 200, the position and/or the orientation of the header 200, or any combination thereof.

For example, the control system 120 may receive the sensor data from the one or more sensors 240, wherein the sensor data is indicative of expected or desirable "off" time and expected or desirable level of stalks at least one emitter-detector pair for at least one row unit 204. Additionally, the control system 120 may receive the sensor data from the one or more sensors 242 of FIG. 2, wherein the sensor data is indicative of excessive MOG along the conveyor 206 (e.g., rearward of the row units 204). In such cases, the control system 120 may analyze the sensor data from the one or more sensors 240, 242 to determine that the appropriate output is to adjust (e.g., increase) a width of the gap 214 to reduce pinching off pieces of the MOG above deck plates of the row units 204.

As another example, the control system 120 may receive the sensor data from the one or more sensors 240, wherein the sensor data is indicative of excessive or undesirable "on" time, as well as excessive or undesirable level of stalks at the at least one emitter-detector pair for at least one row unit 204. Additionally, the control system 120 may receive the sensor data from the one or more sensors 242 of FIG. 2, wherein the sensor data is indicative of excessive MOG along the conveyor 206. In such cases, the control system 120 may analyze the sensor data from the one or more sensors 240, 242 to determine that the appropriate output is to adjust (e.g., increase) the rotation rate of the stalk rollers 210 and/or to reduce the travel speed of the header to facilitate deposition of the MOG at the row units 204.

As yet another example, the control system 120 may receive the sensor data from the one or more sensors 240, wherein the sensor data is indicative of excessive or undesirable "on" time, as well as excessive or undesirable level of stalks at the at least one emitter-detector pair for at least one row unit 204. Additionally, the control system 120 may receive the sensor data from the one or more sensors 242 of FIG. 2, wherein the sensor data is indicative of excessive MOG along the conveyor 206. Additionally, the control system 120 may receive the sensor data from the one or more sensors 248, wherein the sensor data is expected or acceptable level of butt-shelling. In such cases, the control system 120 may analyze the sensor data from the one or more sensors 240, 242, 248 to determine that the appropriate output is to adjust (e.g., increase) the rotation rate of the stalk rollers 210 without changing the travel speed of the header 200 and/or without changing the width of the gap 214, as such changes may facilitate deposition of the MOG at the row units 204 while maintaining efficient harvesting operations with the expected or acceptable level of butt-shelling. Indeed, it should be appreciated that the control system 120 may implement any of a variety of techniques and/or algorithms (e.g., machine learning algorithms) to process the sensor data and to determine the appropriate outputs based on the sensor data.

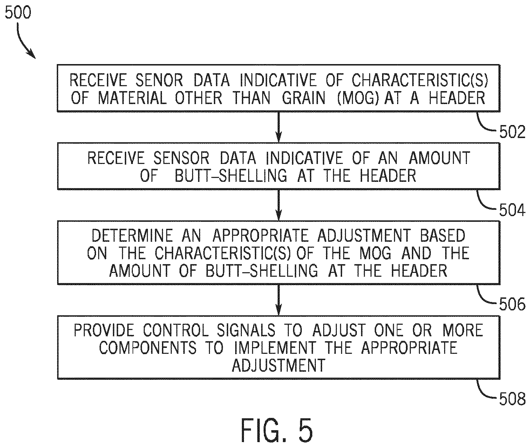

FIG. 5 is a flowchart of an embodiment of a method 500 for operating the agricultural system 100 of FIG. 1 based on a characteristic of the MOG processed by the agricultural system 100 of FIG. 1. The method 500 may be performed by a single respective component or system, such as by the control system (e.g., the processor) disclosed herein. In additional or alternative embodiments, the method 500 may be performed by multiple components or systems. It should also be noted that additional operations may be added. Moreover, certain operations may be removed, modified, and/or performed in a different order. Further still, certain operations may be performed in parallel with one another, such as at the same time and/or in response to one another.

At block 502, the method 500 may be begin with receiving sensor data indicative of characteristic(s) of MOG at a header. For example, the sensor data may be provided or generated by one or more sensors (e.g., optical sensors) positioned along row units of the header and/or one or more sensors (e.g., optical sensors) position in front of a conveyor of the header. The sensor data may indicate presence of the MOG at rear portions of the row units, presence of stalks of the MOG at the rear portions of the row units, presence of MOG along the conveyor, and so forth.

At block 504, the method 500 may continue with receiving sensor data indicative of an amount of butt-shelling at the header. For example, the sensor data may be provided or generated by one or more sensors (e.g., impact sensors; cameras) positioned at the header, such as mounts to one or more hoods that cover portions of the row units of the header. The sensor data may indicate an approximate number of individual airborne kernels and/or particles. In some embodiments, the sensor data may be analyzed to isolate and to count (e.g., approximate) the number of individual airborne kernels separated from a portion of the crop (e.g., ear of corn), such as via image analysis (e.g., computer vision techniques).

At block 506, the method 500 may continue with determining an appropriate adjustment based on the characteristic(s) of the MOG and the amount of butt-shelling at the header. For example and as described herein, the sensor data may be analyzed to determine a percentage of time that light emitted by a light emitter is received at a light detector. The percentage of time may indicate desirable or excessive levels of MOG in the rear portions of the row units. In some cases, certain patterns in the light received at the light detector may indicate desirable or excessive levels of stalks in the rear portions of the row units. Further and as described herein, the sensor data may be analyzed to determine an amount of the MOG along the conveyor, such as based on interruption in light signals, image analysis, or any suitable technique. Then, the amount of MOG along the conveyor may be characterized or determined to correspond to desirable or excessive levels of MOG along the conveyor. Further and as described herein, the sensor data may be analyzed to determine the amount of butt-shelling, such as based on impact detection, image analysis, or any suitable technique. Then, the amount of butt-shelling may be characterized or determined to correspond to desirable or excessive levels of butt-shelling.

In this way, the sensor data may indicate that the header does or does not properly process the MOG and/or that the header does or does not properly process the portion of the crop (e.g., ear of corn). As described herein, the appropriate adjustment may be intended to facilitate efficient harvesting operations via maintaining acceptable processing of MOG (e.g., discharge of the MOG onto the field at the header), as well as via maintaining acceptable processing of the portion of the crop (e.g., ear of corn; without excessive product loss). Artificial intelligence or machine learning, such as via a trained machine learning model, may be implemented to process the sensor data and to determine the appropriate adjustment to provide the efficient harvesting operations.

At block 508, the method 500 continues with providing control signals to adjust one or more components to implement the appropriate adjustment. For example, the control signals may be provided in response to determining the characteristic(s) of the MOG and/or the amount of butt-shelling are outside of respective ranges. The control signals may be output to adjust a width of a gap between deck plates of the row units, a rotation rate of stalk rollers of the row units, a position and/or an orientation of the header relative to a surface of the field, a travel speed of the header, or any combination thereof. Additionally or alternatively, the control signals may be output to provide a notification, which may prompt an operation to manually adjust operation of the agricultural system and/or inspect the agricultural system. Multiple control signals may be output to multiple components at one time or at different times to implement the appropriate adjustment to improve processing of the MOG and/or the portion of the crop (e.g., ear of corn) in different aspects.

In some embodiments, the components of various row units may be adjusted independently of one another, and characteristic(s) of the MOG processed by each row unit may be respectively determined. For example, the stalks in the rear portion of a first row unit may be determined to exceed a threshold value. In response, the speed of the stalk rollers of the first row unit may be increased. However, the stalks in the rear portion of a second row unit may be determined not to exceed the threshold value. Accordingly, the speed of the stalk rollers of the second row unit may be maintained (e.g., the speed of the stalk rollers of the second row unit is different than the speed of the stalk rollers of the first row unit). In this way, specific components of the agricultural system may be operated to process the MOG in an efficient manner. Further, certain adjustments may be implemented on a row unit by row unit basis (e.g., the rotation rate of the stalk rollers in cases where levels of MOG in the rear portions varies by row unit), while other adjustments may be implemented across the header (e.g., the gap between the deck plates is increased at all row units across the width of the header due to excessive butt-shelling across the width of the header). Further, certain sensor data or certain combinations of sensor data may trigger change in the travel speed of the header. For example, excessive levels of MOG at the rear portions of the row units in combination with excessive butt-shelling may trigger a reduction in the travel speed of the header.

While only certain features have been illustrated and described herein, many modifications and changes will occur to those skilled in the art. It is, therefore, to be understood that the appended claims are intended to cover all such modifications and changes as fall within the scope of the appended claims.

## Claims

1. An agricultural system (100), comprising:
a header (200) comprising:
a plurality of row units (204) distributed across a width of the header (200), wherein at least one row unit (204) of the plurality of row units (204) comprises:
a pair of stalk rollers (210) configured to engage material other than grain (MOG) of a crop and to drive the MOG toward a field;
a light emitter (240) configured to emit light; and
a light detector (240) configured to detect the light and to generate a signal indicative of detection of the light at the light detector (240); and
a control system (120) configured to determine a level of the MOG between the light emitter (240) and the light detector (240) based on the signal.

2. The agricultural system (100) of claim 1, wherein the light emitter (240) and the light detector (240) are positioned at a rear portion of the at least one row unit.

3. The agricultural system (100) of any of the previous claims, wherein the light emitter (240) and the light detector (240) are positioned on opposed laterally-facing surfaces of the at least one row unit.

4. The agricultural system (100) of any of the previous claims, wherein the light emitter (240) is configured to emit the light with a wavelength range, and the detector (240) is configured to detect the light with the wavelength range.

5. The agricultural system (100) of any of the previous claims, wherein the control system (120) is configured to compare a respective amount of time that the light is detected at the light detector (240) and a respective amount of time that the light is not detected at the light detector (240) to determine the level of the MOG between the light emitter (240) and the light detector (240) based on the signal.

6. The agricultural system (100) of claim 5, wherein the control system (120) is configured to analyze the signal to identify a pattern in the respective amount of time that the light is detected at the light detector (240) and the respective amount of time that the light is not detected at the light detector (240) to determine a presence of stalks of the MOG between the light emitter (240) and the light detector (240) based on the signal.

7. The agricultural system (100) of any of the previous claims, wherein the control system (120) is configured to provide a control signal to adjust a rotation rate of the pair of stalk rollers (210) and/or to adjust a travel speed of the agricultural system (100) based on the level of the MOG between the light emitter (240) and the light detector (240).

8. The agricultural system (100) of any of the previous claims, wherein the header (200) comprises one or more sensors (242) positioned between the plurality of row units (204) and a conveyor (206) along a longitudinal axis (142) of the header (200), the one or more sensors (242) generate an additional signal indicative of an additional level of the MOG between the plurality of row units (204) and the conveyor (206), and the control system (120) is configured to determine the additional level of the MOG between the plurality of row units (204) and the conveyor (206).

9. The agricultural system (100) of claim 8, wherein the control system (120) is configured to provide a control signal to adjust a rotation rate of the pair of stalk rollers (210), a width of a gap (214) between a pair of deck plates (212) of the at least one row unit (204), a travel speed of the header (200), or any combination thereof based on the level of the MOG between the light emitter (240) and the light detector (240) and the additional level of MOG between the plurality of row units (204) and the conveyor (206).

10. The agricultural system (100) of any of the previous claims, wherein the header (200) comprises one or more sensors (248) positioned at the at least one row unit (204), the one or more sensors (248) generate an additional signal indicative of an additional level of butt-shelling at the at least one row unit (204), and the control system (120) is configured to determine the additional level of the butt-shelling at the at least one row unit (204).

11. The agricultural system (100) of claim 10, wherein the control system (120) is configured to provide a control signal to adjust a rotation rate of the pair of stalk rollers (210), a width of a gap (214) between a pair of deck plates (212) of the at least one row unit (204), a travel speed of the header (200), or any combination thereof based on the level of the MOG between the light emitter (240) and the light detector (240) and the additional level of the butt-shelling at the at least one row unit (204).

12. A method of operating an agricultural system (100), the method comprising:
emitting a light with a light emitter (240) positioned at a row unit (204) of a header (200);
detecting the light with a light detector (240) positioned at the row unit (204) of the header (200); and
determining, with a control system (120), a level of material other than grain (MOG) of a crop between the light emitter (240) and the light detector (240) at the row unit (204) of the header (200).

13. The method of claim 12, comprising providing, with the control system, control signals to adjust a rotation rate of a pair of stalk rollers based on the level of the MOG between the light emitter and the light detector.

14. The method of claim 12, comprising:
detecting, with one or more sensors, an additional level of butt-shelling at the row unit of the header; and
providing, with the control system, control signals to adjust a rotation rate of a pair of stalk rollers, a width of a gap between deck plates, a travel speed of the header, or any combination thereof based on the level of the MOG between the light emitter and the light detector and the additional level of the butt-shelling at the row unit of the header.

15. The method of any of the claims 12 to 14, comprising determining, with the control system and using machine learning algorithms, an appropriate adjustment to one or more components of the header based on the level of the MOG between the light emitter and the light detector at the row unit of the header.
